# EUROPÄISCHE PATENTSCHRIFT

(11) **EP 3 377 884 B1**
(45) Veröffentlichungstag und Bekanntmachung des Hinweises auf die Patenterteilung: **17.04.2024**
(21) Anmeldenummer: 16795087.2
(22) Anmeldetag: 15.11.2016
(51) Int. Cl.: G01N 27/407

(54) **ABGASSENSOR**
EXHAUST GAS SENSOR
CAPTEUR DE GAZ D'ÉCHAPPEMENT

(30) Priorität: 16.11.2015 DE 102015222549; 02.11.2016 DE 102016221502
(43) Veröffentlichungstag der Anmeldung: 26.09.2018
(73) Patentinhaber: Robert Bosch GmbH, 70442 Stuttgart (DE)
(72) Erfinder: KOTYNEK, Milan, 37350 Olesnik (CZ); VACHA, Karel, 38232 Mirkovice (CZ); GMELIN, Christoph, 70597 Stuttgart (DE); GITZMANN, Rafael, 70435 Stuttgart (DE); LIEBLOVA, Katerina, 38201 Dolni Trebonin (CZ); RENTSCHLER, Simon, 71409 Schwaikheim (DE); SCHULTE AM HUELSE, Sebastian, 70191 Stuttgart (DE); SILLMANN, Benjamin, 70567 Moehringen (DE); WEBER, Johannes, 70188 Stuttgart (DE); HOLZKNECHT, Christopher, 70193 Stuttgart (DE); BUEHLER, Stefan, 77876 Kappelrodeck (DE)
(86) Internationale Anmeldenummer: PCT/EP2016/077686
(87) Internationale Veröffentlichungsnummer: WO 2017/085047

(56) Entgegenhaltungen:
- WO-A1-2008/078576
- DE-A1- 19 924 319
- DE-A1-102007 040 507
- DE-A1-102012 214 251
- DE-A1-102013 221 255
- DE-T5-112013 006 150
- US-A1- 2009 117 007
- US-B1- 6 346 179

## Beschreibung

### Stand der Technik

Die Erfindung geht aus von einem Gassensor, insbesondere zur Bestimmung des Sauerstoffgehaltes oder einer Partikelkonzentration in Abgasen von Verbrennungsmotoren, nach dem Oberbegriff des unabhängigen Anspruchs.

Aus der DE-19628423 A1 ist bereits ein Gassensor mit einem Sensorelement bekannt, das in einem metallischen Gehäuse gasdicht fixiert ist. Dieser Gassensor weist ein doppelwandiges Schutzrohr mit einer äußeren Schutzhülse und einer inneren Schutzhülse auf, die jeweils Öffnungen zum Gasein- und/oder Gasaustritt haben. Die innere Schutzhülle bildet einen Gasraum, in den das Sensorelement mit einem abgasseitigen Abschnitt eintaucht. Die äußere Schutzhülse ist eine Hülse mit einer geschlossenen Mantelfläche, wobei die Öffnungen zum Gasein- und/oder Gasaustritt in den Zwischenraum an der Stirnseite der Hülse angeordnet sind. Der von der inneren Schutzhülse gebildete Gasraum hat senkrecht zur Erstreckungsrichtung des Sensorelements einen rechteckförmigen Querschnitt.

Weitere Gassensoren sind bekannt aus der US 2009/117007 A, der DE 11 2013 006 150 T5, der US 6 346 179 B1, der DE 199 24 319 A1, der DE 10 2012 214 251 A1, der DE 10 2007 040 507 A1, der DE 10 2013 221 255 A1 und der WO 2008/078 576 A1.

### Offenbarung der Erfindung

Der erfindungsgemäße Gassensor bildet mit den kennzeichnenden Merkmalen des Anspruchs 1 den bekannten Gassensor dahingehend weiter, dass seine Dynamik verbessert ist, eine Abhängigkeit seiner Messfunktion von seiner Orientierung in Einbaulage eliminiert ist und ferner seine Robustheit gesteigert ist.

So ist vorgesehen, dass die äußere Schutzhülse eine Mantelfläche mit zumindest einer als Drallelement ausgebildeten Öffnung aufweist, durch die Messgas unter Rotation um eine Längsachse des Gassensors in den zwischen der inneren Schutzhülse und der äußeren Schutzhülse ausgebildeten Ringraum gelangt.

Bei der zumindest einen als Drallelement ausgebildeten Öffnung kann es sich beispielsweise um einen Kranz von Öffnungen handeln, die beispielsweise in gleichen Abständen zueinander und auf gleicher Höhe in Längserstreckung des Sensors auf der Mantelfläche der äußeren Schutzhülse angeordnet sind. Beispielsweise kann es sich um eine ungerade Anzahl von Öffnungen handeln. Die Öffnungen können beispielsweise dadurch als Drallelemente ausgebildet sein, dass es sich um Drallklappen handelt, die beispielsweise durch Eindrücken bzw. Herausdrücken jeweils eines Segments der äußeren Schutzhülse hergestellt sind.

Die Drallelemente sind derart ausgerichtet, dass Messgas unter Rotation um eine Längsachse des Gassensors in den Ringraum gelangt. Hierzu weisen sie insbesondere in eine Richtung senkrecht zur Längsachse des Gassensors. Es kann aber auch vorgesehen sein, dass die Drallelemente zusätzlich auch eine Komponente in oder entgegen der Längsachse des Gassensors aufweisen.

Dadurch, dass das Messgas unter Rotation um die Längsachse des Gassensors in den Ringraum eintritt, wird erreicht, dass die Abhängigkeit der Sensorfunktion von der Orientierung des Gassensors in einer Messgasströmung vermindert wird. Zusätzlich entsteht die Wirkung, dass die Rotation des Messgases in dem Ringraum geeignet ist, eventuell vorhandene flüssige Bestandteile des Messgases, beispielsweise Wassertropfen, von der inneren Schutzhülse und dem Gasraum und damit von dem Sensorelement fernzuhalten. Stattdessen verbleiben flüssige Bestandteile des Messgases auf der Innenseite der äußeren Schutzhülse bis sie verdampfen oder den Ringraum durch die Öffnungen der äußeren Schutzhülse wieder verlassen.

Die innere Schutzhülse weist, insbesondere auf ihrer Mantelfläche, zumindest eine Öffnung auf, durch die Messgas aus dem Ringraum in den Gasraum gelangt.

Bei der zumindest einen Öffnung kann es sich um eine einzelne Öffnung oder um eine Mehrzahl von Öffnungen handeln, beispielsweise um Öffnungen die zu ihren Nachbarn einen gleichen Abstand aufweisen und auf einem Lochkranz auf gleicher Höhe in Längserstreckung des Gassensors liegen. Alternativ können die Öffnungen auch mit ungleichen Abständen und/oder außerhalb eines Lochkranzes angeordnet sein. Die Löcher können beispielsweise übereinander ausgerichtet sein.

Erfindungsgemäß ist die zumindest eine Öffnung hinsichtlich eines sensitiven Bereichs des Sensorelements ausgerichtet, nämlich so, dass das Messgas bei Durchtritt durch die Öffnung in Längsrichtung des Gassensors zu dem Sensorelement hin umgelekt wird.

Der Gassensor kann ein Sauerstoffsensor sein, beispielsweise eine Breitbandlambdasonde oder ein NOx-Sensor, und ein Sensorelement aufweisen, das einen in seinem Inneren ausgebildeten Hohlraum und eine elektrochemische Zelle mit zwei Elektroden, von denen zumindest eine in dem Hohlraum angeordnet ist, aufweist und ferner ein Gaszutrittsloch aufweist, das den Gasraum mit dem Hohlraum verbindet.

Die Funktion solch eines Sauerstoffsensors ist insbesondere dadurch gegeben, dass der in den Hohlraum gelangende Sauerstoff über die elektrochemische Zelle abgepumpt wird und der resultierende Pumpstrom als Maß für die Sauerstoffkonzentration im Messgas zur Verfügung steht.

In Weiterbildung kann die innere Schutzhülse stirnseitig eine Öffnung aufweisen, die als Klappe ausgebildet ist, insbesondere als in den Gasraum eingedrücktes Segment. Im Vergleich zu einer einfachen lochartigen Öffnung resultiert der Vorteil, dass auf diese Weise feste und flüssige Bestandteile eines Gases von dem Sensorelement abgehalten werden, selbst wenn Messgas durch diese Öffnung in das Innere des Gassensors, insbesondere in den Gasraum, gelangt.

In Weiterbildung kann die zumindest eine Öffnung der inneren Schutzhülse eine längliche Form aufweisen, deren lange Seite in Längsrichtung des Gassensors weist. Alternativ kann die zumindest eine Öffnung der inneren Schutzhülse auch aus mehreren Öffnungen bestehen, die in Längsrichtung des Gassensors hintereinander angeordnet sind.

Die Erfindung ist nicht auf Sauerstoffsensoren der hier näher beschriebenen Art beschränkt. Im Lichte des vorliegend Offenbarten findet der Fachmann für andere Gassensoren erfindungsgemäße Ausführungsformen.

Erfindungsgemäß ist vorgesehen, dass die zumindest eine Öffnung der inneren Schutzhülse als weiteres Drallelement ausgebildet ist, das zu dem Drallelement der äußeren Schutzhülse in Umfangsrichtung gegensinnig orientiert ist.

Die Erfindung kann einerseits mit Schutzrohren realisiert sein, bei denen eine Stirnseite der inneren Schutzhülse in Längsrichtung über eine Stirnseite der äußeren Schutzhülse hinausgeht. Es resultiert auf diese Weise ein besonders länglich ausgebildeter Gasraum.

Alternativ kann auch vorgesehen sein, dass die Stirnseite der inneren Schutzhülse in Längsrichtung nicht über die Stirnseite der äußeren Schutzhülse hinausgeht und zwischen der inneren Schutzhülse und der äußeren Schutzhülse stirnseitig ein Zwischenraum ausgebildet ist, der von dem Ringraum getrennt ist.

### Zeichnung

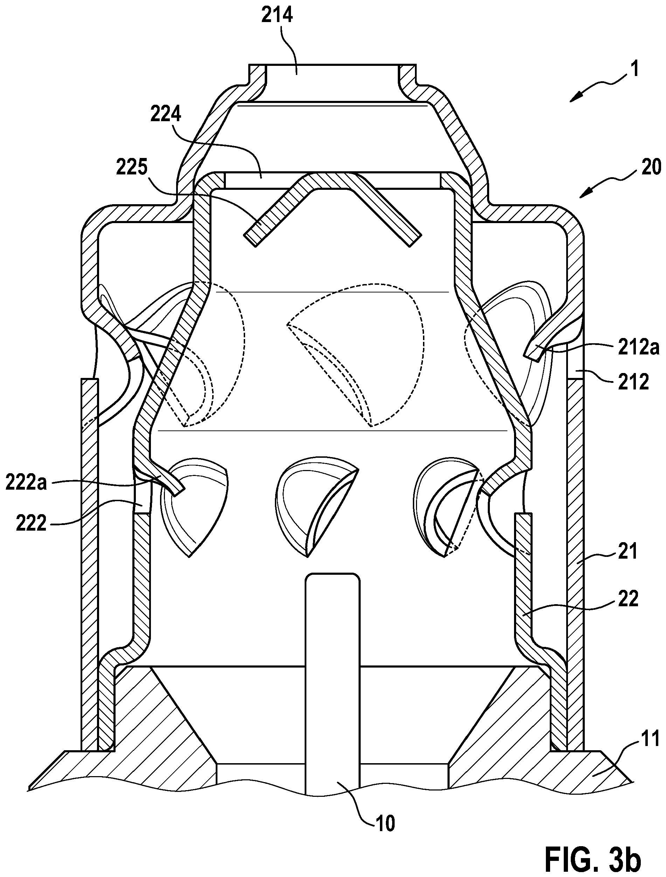

Ein Ausführungsbeispiel der Erfindung ist in der Figur 3b der Zeichnung dargestellt und nachfolgend erläutert.

### Ausführungsbeispiele

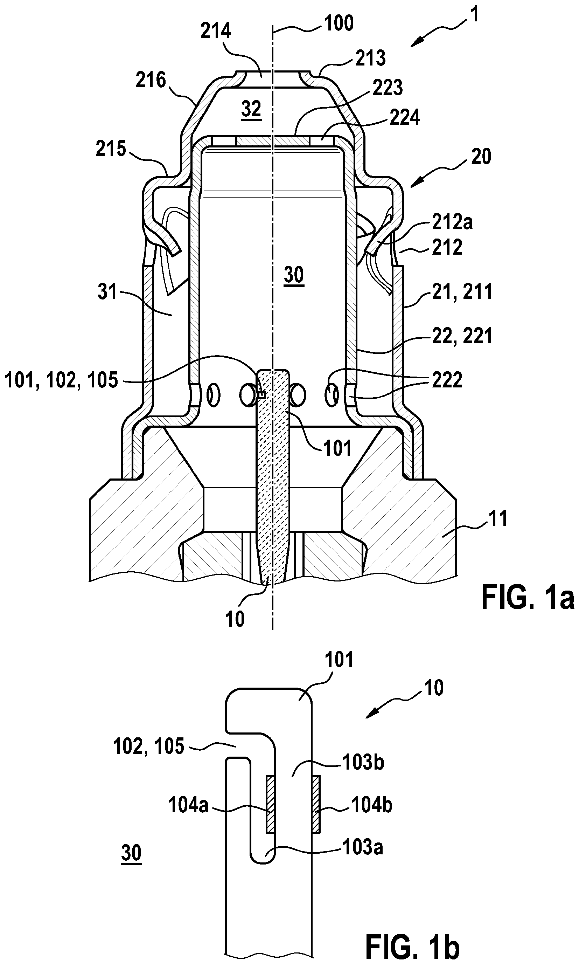

Figur 1a zeigt einen Gassensor 1 zum Nachweis von Sauerstoff in einem Abgas einer Brennkraftmaschine. Es handelt sich um eine Breitbandlambdasonde mit einem keramischen Sensorelement 10, das in einem Gehäuse 11 fixiert ist. Die Breitbandlambdasonde weist ein doppelwandiges Schutzrohr 20 auf, das im Beispiel aus einer inneren Schutzhülse 22 und eine äußeren Schutzhülse 21 besteht. Die innere Schutzhülse 22 umschließt einen Gasraum 30 in den das Sensorelement 10 mit einem messgasseitigen Abschnitt 101 hineinragt. Zwischen der äußeren Schutzhülse 21 und der inneren Schutzhülse 22 ist ein Ringraum 31 ausgebildet. Die äußere Schutzhülse 21 weist eine Mantelfläche 211 und eine Stirnseite 213 auf. Zwischen der Mantelfläche 211 und der Stirnseite 213 sind im Beispiel ein Ringabsatz 215 und ein Verbindungsbereich 216 ausgebildet.

Auf der Mantelfläche 211 der äußeren Schutzhülse 21 sind auf einem umlaufenden Lochkranz Öffnungen 212 in Form von Drallklappen 212a ausgebildet, durch die Messgas unter Rotation um eine Längsachse 100 des Gassensors 1 gelangt. Die Drallklappen 212a sind im Beispiel als nach innen gebogene Segmente ausgebildet. Alternativ können die Drallklappen 212a stets auch als nach außen gebogene Segmente ausgebildet sein.

Die innere Schutzhülse 22 weist eine Mantelfläche 221 und eine Stirnseite 223 auf.

Vorliegend ist die innere Schutzhülse 22 vollständig in der äußeren Schutzhülse 21 ausgebildet, insbesondere geht die Stirnseite 223 der inneren Schutzhülse 22 in Längsrichtung des Gassensors nicht über die Stirnseite 213 der äußeren Schutzhülse 21 hinaus und zwischen der inneren Schutzhülse 22 und der äußeren Schutzhülse 21 ist ein Zwischenraum 32 ausgebildet, der von den Ringraum 31 fluidisch getrennt ist.

Die innere Schutzhülse 22 weist auf einem Lochkranz als Löcher ausgebildete Öffnungen 222 auf, durch die Messgas aus dem Ringraum 31 in den Gasraum 30 gelangen kann.

Das Sensorelement 10 der Lambdasonde ist ein keramischer Körper mit einem in seinem Inneren ausgebildeten Hohlraum 103a und einer elektrochemischen Zelle 103b, die zwei Elektroden 104a, 104b aufweist, von denen eine in dem Hohlraum 103a angeordnet ist. Das Sensorelement 10 weist ferner ein Gaszutrittsloch 105 auf, das den Gasraum 30 mit dem Hohlraum 103a verbindet, wie auch aus Figur 1b ersichtlich.

Es ist vorgesehen, dass die Öffnungen 222 der inneren Schutzhülse 22 und das Gaszutrittsloch 105 auf gleicher Höhe in Längserstreckung des Gassensors 1 angeordnet sind, sodass das Messgas, das durch die Öffnungen 222 der inneren Schutzhülse 22 in den Gasraum 30 gelangt, unmittelbar durch das Gaszutrittsloch 105 in den Hohlraum 103a gelangen kann.

Auf diese Weise sind die Öffnungen 222 des inneren Schutzrohrs 22 hinsichtlich des Gaszutrittslochs 105 bzw. des inneren Hohlraums 103a funktionsoptimiert ausgerichtet.

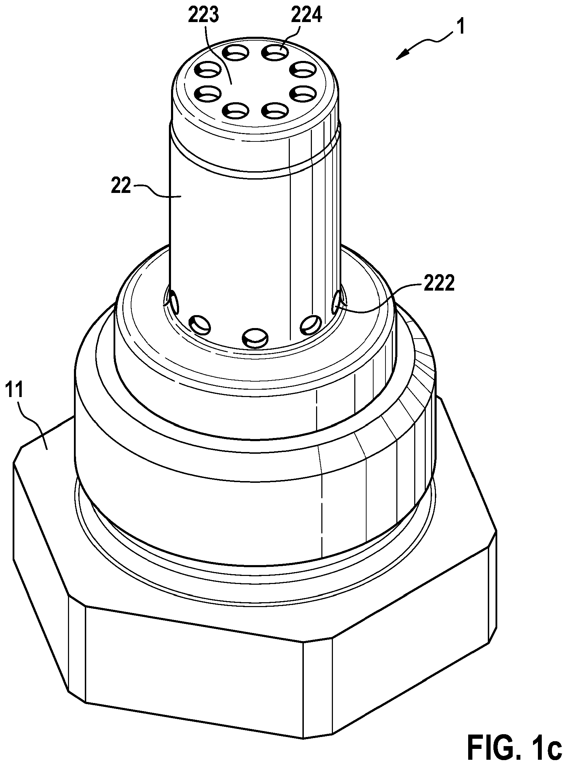

Die innere Schutzhülse 22 weist auf seiner Stirnseite 223 insgesamt acht Löcher 224 auf, wie aus Figur 1c ersichtlich ist, die den in Figur 1a gezeigten Gassensor 1 mit abmontierter äußerer Schutzhülse 21 zeigt.

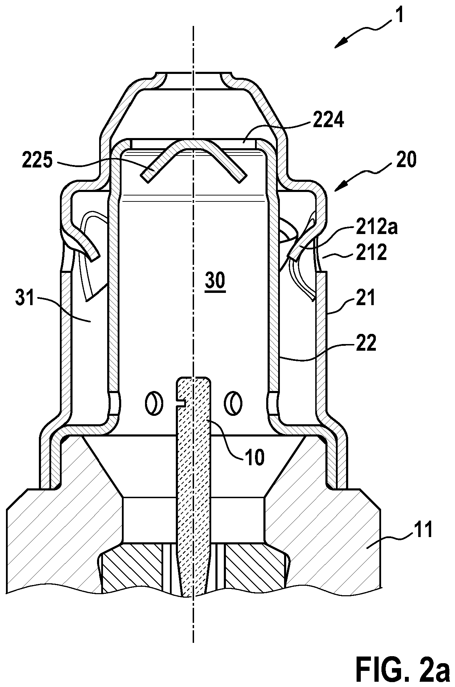

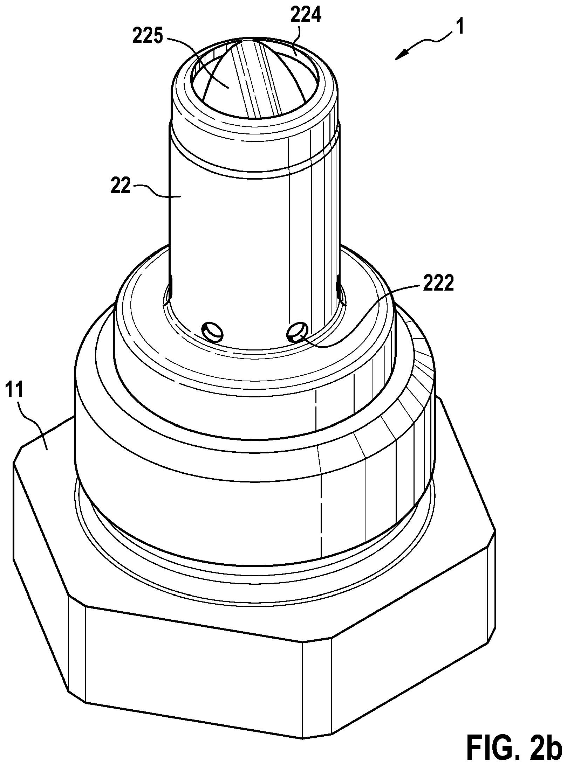

Eine Modifikation ist in den Figuren 2a und 2b zu sehen. Im Unterschied zu den Figuren 1a und 1c weist die innere Schutzhülse 22 hierbei auf seiner Stirnseite 223 lediglich zwei Öffnungen 224 auf, die als Klappen 225 durch Eindrücken von Segmenten ausgebildet sind.

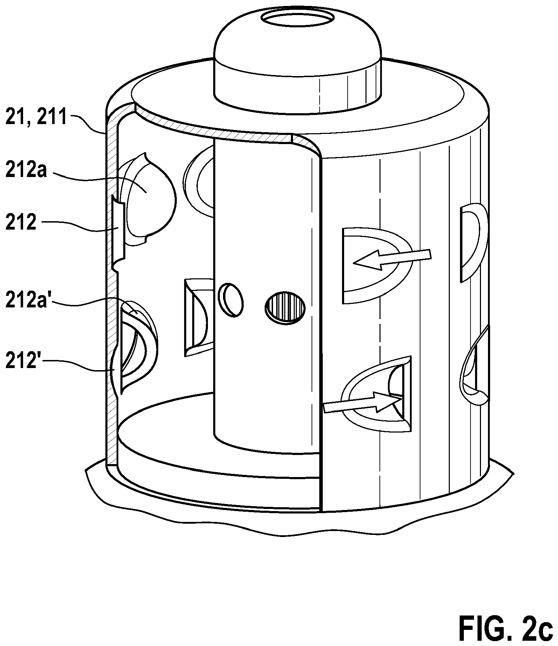

Eine andere Modifikation ist in der Figur 2c zu sehen. Im Unterschied zu den Figuren 1a und 1c weist die äußere Schutzhülse 21 Öffnungen 212, 212' auf, die auf zwei Lochkränzen liegen, die in Längsrichtung 100 des Gassensors gesehen hintereinander angeordnet sind. Die Öffnungen 212, 212' sind als Drallelemente 212a, 212a' ausgebildet, sodass sie Messgas unter Rotation um die Längsachse 100 des Gassensors 1 in den Ringraum 31 einleiten. Die Drallelemente 212a, 212a' die auf dem distalen Lochkranz liegen, erzeugen dabei eine Rotation, die der Rotation, die die Drallelemente 212a, 212a`erzeugen, die auf dem proximalen Lochkranz liegen, entgegengerichtet ist.

Ein Ausführungsbeispiel der vorliegenden Erfindung ist mit Bezug auf die Figur 3b dargestellt. Das Ausführungsbeispiel sieht vor, dass die Öffnungen 222 des inneren Schutzrohrs 22 als weitere Drallklappen 222a ausgebildet sind. Die in den Gasraum 30 eintretende Strömung ist dabei insbesondere wieder unmittelbar auf das Gaszutrittsloch 105 des Sensorelements gerichtet.

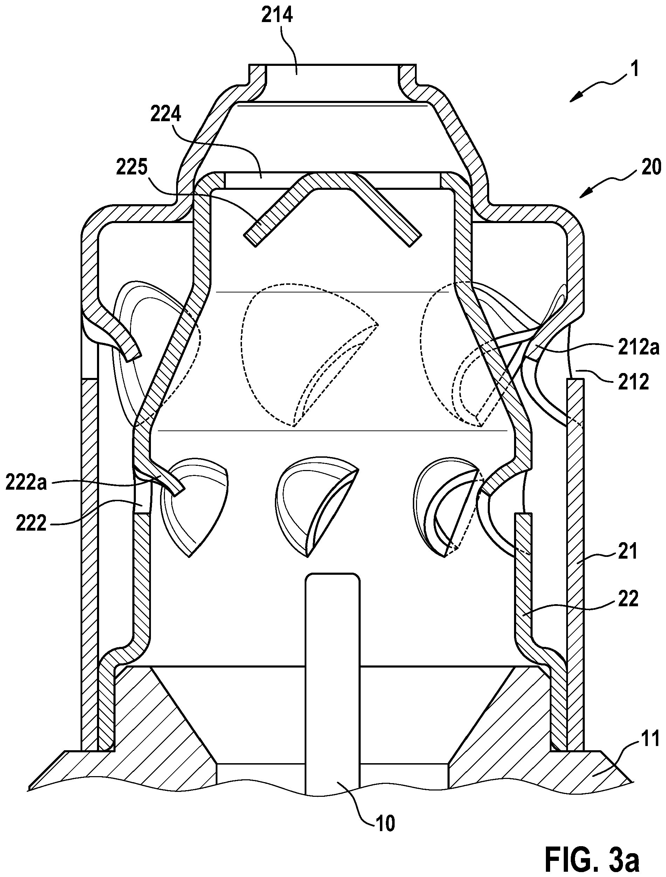

Figur 3a zeigt dabei einen Sensor, bei dem die Drallklappen 212a der äußeren Schutzhülse 21 und die weiteren Drallklappen 222a der inneren Schutzhülse 22 gleichsinnig orientiert sind. Figur 3b zeigt dabei eine Ausführungsform, in der die Drallklappen 212a der äußeren Schutzhülse 21 und die weiteren Drallklappen 222a der inneren Schutzhülse 22 gegensinnig orientiert sind.

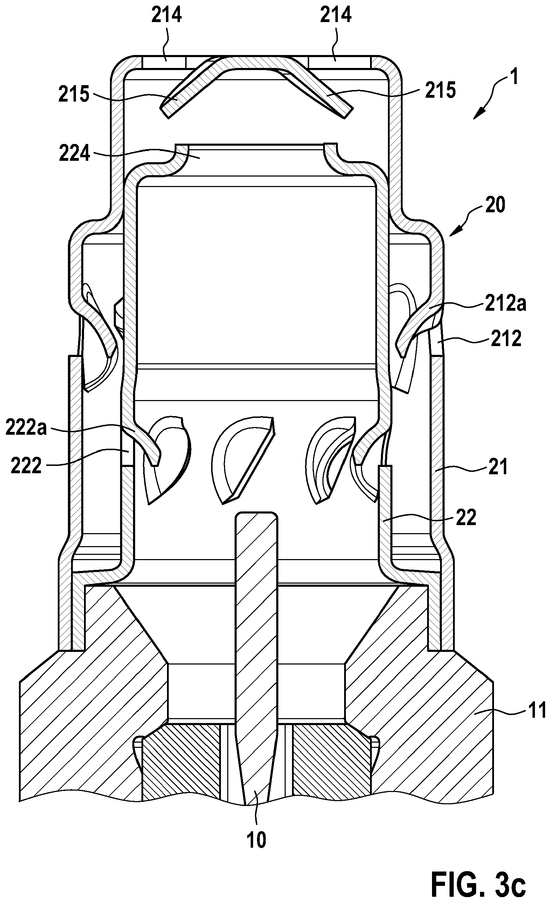

Figur 3c zeigt jeweils eine Modifikation mit Hinblick auf die in den Figuren 2a, 2b, 3a und 3b zeigten Ausführungen. Hierbei ist vorgesehen, dass das innere Schutzrohr 22 auf seiner Stirnseite nur eine zentrale runde Öffnung 224 aufweist. Diese Öffnung 224 ist relativ groß, beispielsweise mit einem Öffnungsdurchmesser, der nicht kleiner ist als der halbe Innendurchmesser des inneren Schutzrohrs 22. Ferner ist bei diesen Modifikationen vorgesehen, dass das äußere Schutzrohr 21 auf seiner Stirnseite zwei Öffnungen 214 aufweist, die als Klappen 215 durch Eindrücken von Segmenten ausgebildet sind. Diese Modifikation erhöht die Dynamik des Gassensors weiter, da der Strömungswiderstand auf ein Minimum reduziert ist.

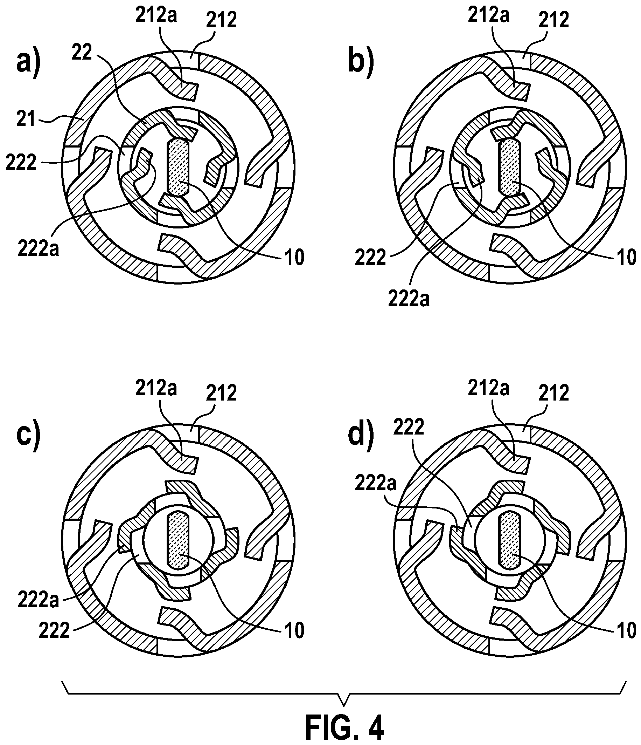

Verschiedene Orientierungen der Drallklappen 212a der äußeren Schutzhülse 21 und der weiteren Drallklappen 222a der inneren Schutzhülse 22 sind in der Figur 4 in virtuellen Aufsichten auf das Schutzrohr 20 dargestellt. Während beispielsweise in Figur 4a und Figur 4c Sensoren dargestellt sind, bei denen das Messgas mit hoher Dynamik aus dem Ringraum 31 in den Gasraum 30 einströmen kann, zeigen die Figuren 4b und 4d Ausführungsformen, bei denen es hierfür einer Umlenkung der Strömung bedarf, was zwar die Dynamik des Sensors mindert, andererseits aber sehr vorteilhaft das Sensorelement 10 vor dem Eindringen von im Messgas möglicherweise vorhandener Wassertropfen schützen kann.

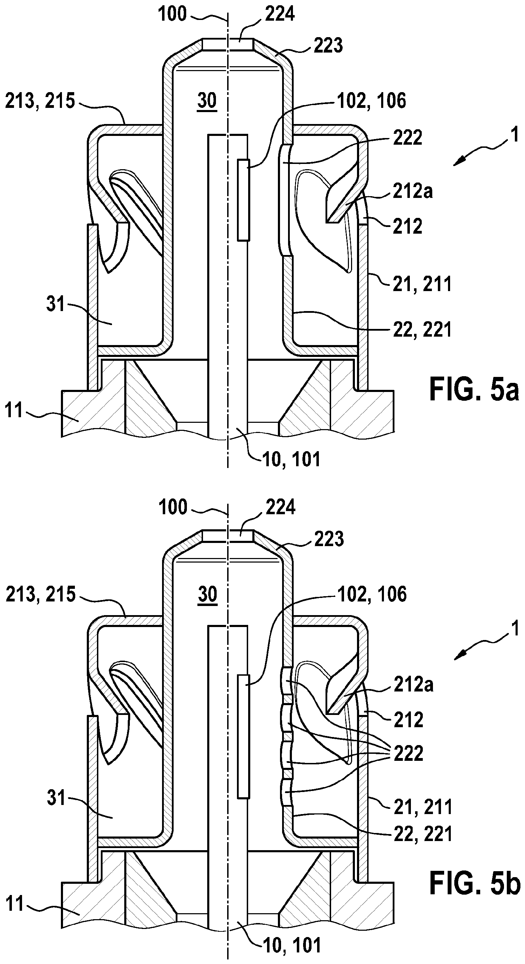

Figuren 5a-5d der Zeichnungen zeigen Partikelsensoren, die nicht von der vorliegenden Erfindung beansprucht sind. Sie sind im Folgenden beispielhaft erläutert. Figur 5a zeigt einen Partikelsensor zum Nachweis von Ruß in einem Abgas mit einem keramischen Sensorelement 10, das in einem Gehäuse 11 fixiert ist. Der Partikelsensor weist ein doppelwandiges Schutzrohr 20 auf, das im Beispiel aus einer inneren Schutzhülse 22 und eine äußeren Schutzhülse 21 besteht. Die innere Schutzhülse 22 umschließt einen Gasraum 30 in den das Sensorelement 10 mit einem messgasseitigen Abschnitt 101 hineinragt. Zwischen der äußeren Schutzhülse 21 und der inneren Schutzhülse 22 ist ein Ringraum 31 ausgebildet. Die äußere Schutzhülse 21 weist eine Mantelfläche 211 und eine Stirnseite 213 auf.

Auf der Mantelfläche 211 der äußeren Schutzhülse 21 sind auf einem umlaufenden Lochkranz Öffnungen 212 in Form von Drallklappen 212a ausgebildet, durch die Messgas unter Rotation um eine Längsachse 100 des Gassensors 1 gelangt. Die Drallklappen 212a sind im Beispiel als nach innen gebogene Segmente ausgebildet. Sie können mit einem Winkel von 0° bis 90° zur Längsache 100 des Gassensors ausgerichtet sein, in diesem Beispiel sind es 45°.

Alternativ können die Drallklappen 212a stets auch als nach außen gebogene Segmente ausgebildet sein.

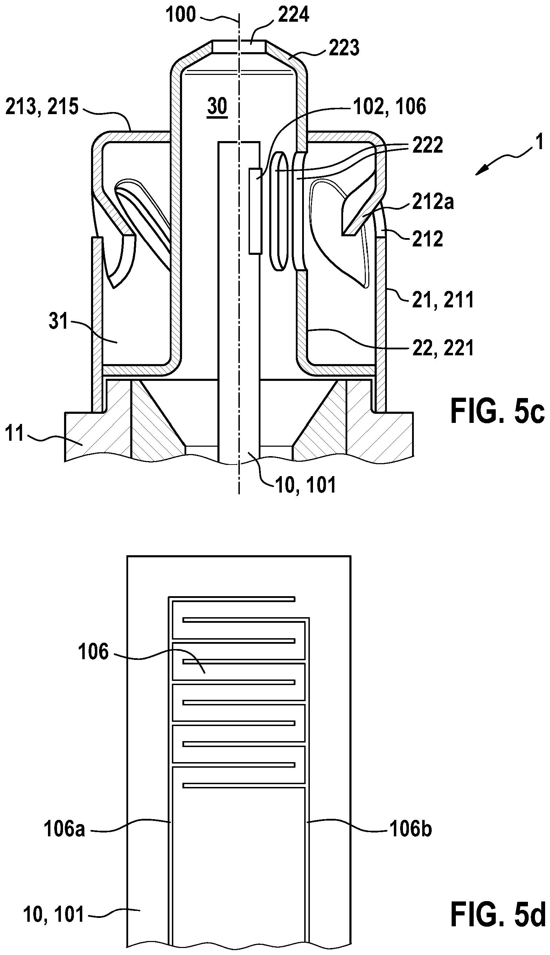

Der messgasseitige Abschnitt 101 des Sensorelements 10 des Partikelsensors ist in der Figur 5d vergrößert und in Aufsicht gemäß einer Blickrichtung in der Figur 5a von rechts nach links dargestellt. Das Sensorelement 10 weist lediglich auf seiner dem Betrachter in der Figur 5d zugewandten Seite eine Interdigitalelektrode 106 auf. Die Interdigitalelektrode 106 besteht aus zwei kammartigen Leiterstrukturen 106a, 106b, die ineinander eingreifen.

Die innere Schutzhülse 22 weist auf seiner Mantelfläche 221 genau eine als Loch ausgebildete Öffnung 222 auf, die im Beispiel länglich ausgebildet ist, wobei ihre lange Seite in Längsrichtung des Gassensors 1 weist.

Es ist vorgesehen, dass die Öffnung 222 des inneren Schutzrohrs 22 und die Interdigitalelektrode 106 des Sensorelements 10 einander zugewandt sind, sodass das Messgas, dass durch die Öffnung 222 der inneren Schutzhülse 22 in den Gasraum 30 gelangt, unmittelbar die Interdigitalelektrode 106 beaufschlagt.

Auf diese Weise ist die Öffnung 222 des inneren Schutzrohrs 22 hinsichtlich der Interdigitalelektrode 106 funktionsoptimiert ausgerichtet.

Die Figur 5b zeigt eine Modifikation, bei der an die Stelle der als längliches Loch ausgebildeten Öffnung 222 mehrere als ruhende Löcher ausgebildete Öffnungen 222 treten, die in Längsrichtung des Gassensors 1 übereinander angeordnet sind.

Die Figur 5c zeigt eine weitere Modifikation, bei der der als ein längliches Loch ausgebildeten Öffnung 222 eine zweite als längliches Loch ausgebildete Öffnung 222 hinzutritt, wobei die beiden Öffnungen 222 in Umfangsrichtung des inneren Schutzrohrs 22 um beispielsweise 25° (oder um 45° oder sogar um 90°) zueinander versetzt sind und in Summe der Interdigitalelektrode 106 des Sensorelements 10 zugewandt sind, analog der eingangs dargestellten Ausführungsform des dritten Ausführungsbeispiel.

Es ist ferner möglich, dass in Umfangrichtung mehrere Schlitze oder Reihen mit übereinander angeordneten Öffnungen vorgesehen sind, beispielsweise eingestanzt werden.

Gemäß Figur 5a geht die innere Schutzhülse 22 in Längsrichtung über die äußere Schutzhülse 21 hinaus, indem die innere Schutzhülse 22 die äußere Schutzhülse 21 an der als Ringabsatz 215 ausgebildeten Stirnseite 213 der äußeren Schutzhülse 21 durchdringt.

## Patentansprüche

1. Gassensor zum Nachweis eines Bestandteiles eines Messgases mit einem keramischen Sensorelement (10), welches in einem Gehäuse (11) fixiert ist, und mit einem doppelwandigen Schutzrohr (20) mit einer äußeren Schutzhülse (21) und einer inneren Schutzhülse (22), wobei die innere Schutzhülse (22) einen Gasraum (30) umschließt, in den das Sensorelement (10) mit einem messgasseitigen Abschnitt (101) in Richtung einer Längsachse (100) des Gassensors hineinragt, und wobei zwischen der äußeren und der inneren Schutzhülse (21, 22) ein Ringraum (31) ausgebildet ist, wobei die äußere Schutzhülse (21) eine Mantelfläche (211) mit zumindest einer als Drallelement (212a) ausgebildeten Öffnung (212) aufweist, durch die Messgas unter Rotation um eine Längsachse (100) des Gassensors (1) in den Ringraum (31) gelangt,
wobei die innere Schutzhülse (22) zumindest eine hinsichtlich eines sensitiven Bereichs (102) des Sensorelements (10) ausgerichtete, insbesondere funktionsoptimiert ausgerichtete, Öffnung (222) aufweist, durch die Messgas aus dem Ringraum (31) in den Gasraum (30) gelangt und das Messgas bei Durchtritt durch die Öffnung (222) aufgrund der Ausrichtung der Öffnung (222) in Längsrichtung zu dem Sensorelement (10) umgelenkt wird **dadurch gekennzeichnet, dass** die zumindest eine Öffnung (222) der inneren Schutzhülse (22) als weiteres Drallelement (222a) ausgebildet ist, das dem Drallelement der äußere Schutzhülse (212a) in Umfangsrichtung gegensinnig orientiert ist.

2. Gassensor nach Anspruch 1, **dadurch gekennzeichnet, dass** der Gassensor (1) ein Sauerstoffsensor ist, dessen Sensorelement (10) einen in seinem Inneren ausgebildeten Hohlraum (103a) und eine elektrochemische Zelle (103b) aufweist, dass die elektrochemische Zelle (103b) zwei Elektroden (104a, 104b) aufweist, von denen zumindest eine in dem Hohlraum (103a) angeordnet ist, dass das Sensorelement (10) ein Gaszutrittsloch (105) aufweist, das den Gasraum (30) mit dem Hohlraum (103a) verbindet.

3. Gassensor nach einem der Ansprüche 1 oder 2, **dadurch gekennzeichnet, dass** die zumindest eine Öffnung (222) der inneren Schutzhülse (22) als über den Umfang der inneren Schutzhülse (22) umlaufender Lochkranz ausgebildet ist.

4. Gassensor nach einem der vorangehenden Ansprüche, **dadurch gekennzeichnet, dass** die innere Schutzhülse (22) stirnseitig zumindest eine weitere Öffnung (224) aufweist, die in Form eines in den Gasraum eingedrückten Segments (225) ausgebildet ist.

5. Gassensor nach einem der vorangehenden Ansprüche, **dadurch gekennzeichnet, dass** eine Stirnseite (223) der inneren Schutzhülse (22) in Längsrichtung über eine Stirnseite (213) der äußere Schutzhülse (21) hinausgeht.

6. Gassensor nach einem der vorangehenden Ansprüche, **dadurch gekennzeichnet, dass** die Stirnseite (223) der inneren Schutzhülse (22) in Längsrichtung nicht über die Stirnseite (213) der äußere Schutzhülse (21) hinausgeht und zwischen der inneren Schutzhülse (22) und der äußere Schutzhülse (21) stirnseitig ein Zwischenraum (32) ausgebildet ist, der von dem Ringraum (31) fluidisch getrennt ist.

7. Gassensor nach einem der vorangehenden Ansprüche, **dadurch gekennzeichnet, dass** die Mantelfläche (211) zumindest eine weitere als Drallelement (212a') ausgebildete Öffnung (212') aufweist, durch die Messgas unter einer der Rotation entgegengerichteten Rotation um die Längsachse (100) des Gassensors (1) in den Ringraum (31) gelangen kann.

8. Gassensor nach einem der vorangehenden Ansprüche, **dadurch gekennzeichnet, dass** die äußere Schutzhülse (21) Öffnungen (212, 212') aufweist, die auf zwei Lochkränzen liegen, die in Längsrichtung (100) des Gassensors gesehen hintereinander angeordnet sind und dass die Öffnungen (212, 212') als Drallelemente (212a, 212a') ausgebildet sind, sodass sie Messgas unter Rotation um die Längsachse (100) des Gassensors (1) in den Ringraum (31) einleiten und dass die Drallelemente (212a) die auf dem distalen Lochkranz liegen eine Rotation erzeugen, die der Rotation, die die Drallelemente (212a') erzeugen, die auf dem proximalen Lochkranz liegen, entgegengerichtet ist.

9. Gassensor nach einem der vorangehenden Ansprüche, **dadurch gekennzeichnet, dass** die äußere Schutzhülse (21) mindestens zwei stirnseitige Öffnungen (214) aufweist, die als eingedrückte Segmente (215) ausgebildet sind.

10. Gassensor nach Anspruch 9, **dadurch gekennzeichnet, dass** das innere Schutzrohr (22) auf seiner Stirnseite nur eine zentrale runde Öffnung (224) aufweist, deren Öffnungsdurchmesser nicht kleiner ist als der halbe Innendurchmesser der inneren Schutzhülse (22).

## Claims

1. Gas sensor for detecting a component of a measurement gas, with a ceramic sensor element (10), which is fixed in a housing (11), and with a double-walled protective tube (20) having an outer protective sleeve (21) and an inner protective sleeve (22), wherein the inner protective sleeve (22) encloses a gas space (30) into which the sensor element (10) protrudes with a measurement-gas-side section (101) in the direction of a longitudinal axis (100) of the gas sensor, and wherein an annular space (31) is formed between the outer and the inner protective sleeve (21, 22), wherein the outer protective sleeve (21) has a lateral surface (211) having at least one opening (212) formed as a swirling element (212a), through which measurement gas enters the annular space (31) with rotation about a longitudinal axis (100) of the gas sensor (1), wherein the inner protective sleeve (22) has at least one opening (222) which is aligned, in particular aligned in a functionally optimized manner, with a sensitive region (102) of the sensor element (10) and through which measurement gas from the annular space (31) enters the gas space (30) and, when it passes through the opening (222), the measurement gas is deflected in the longitudinal direction to the sensor element (10) as a result of the alignment of the opening (222), **characterized in that** the at least one opening (222) of the inner protective sleeve (22) is formed as a further swirling element (222a), which is oriented oppositely in the circumferential direction to the swirling element of the outer protective sleeve (212a).

2. Gas sensor according to Claim 1, **characterized in that** the gas sensor (1) is an oxygen sensor, the sensor element (10) of which has a hollow space (103a) formed in its interior and has an electrochemical cell (103b), **in that** the electrochemical cell (103b) has two electrodes (104a, 104b), at least one of which is arranged in the hollow space (103a), and **in that** the sensor element (10) has a gas inlet hole (105), which connects the gas space (30) to the hollow space (103a).

3. Gas sensor according to either of Claims 1 and 2, **characterized in that** the at least one opening (222) of the inner protective sleeve (22) is formed as a ring of holes encircling the circumference of the inner protective sleeve (22).

4. Gas sensor according to one of the preceding claims, **characterized in that** the inner protective sleeve (22) has on the end face at least one further opening (224), which takes the form of a segment (225) pressed into the gas space.

5. Gas sensor according to one of the preceding claims, **characterized in that** an end face (223) of the inner protective sleeve (22) extends out beyond an end face (213) of the outer protective sleeve (21) in the longitudinal direction.

6. Gas sensor according to one of the preceding claims, **characterized in that** the end face (223) of the inner protective sleeve (22) does not extend out beyond the end face (213) of the outer protective sleeve (21) in the longitudinal direction and formed between the inner protective sleeve (22) and the outer protective sleeve (21) at the end face is an intermediate space (32), which is fluidically separated from the annular space (31).

7. Gas sensor according to one of the preceding claims, **characterized in that** the lateral surface (211) has at least one further opening (212') formed as a further swirling element (212a'), through which measurement gas can enter the annular space (31) with counter-rotating rotation about the longitudinal axis (100) of the gas sensor (1).

8. Gas sensor according to one of the preceding claims, **characterized in that** the outer protective sleeve (21) has openings (212, 212'), which lie on two rings of holes which are arranged one behind the other, seen in the longitudinal direction (100) of the gas sensor, and **in that** the openings (212, 212') are formed as swirling elements (212a, 212a'), so that they introduce measurement gas into the annular space (31) with rotation about the longitudinal axis (100) of the gas sensor (1) and **in that** the swirling elements (212a) which lie on the distal ring of holes produce a rotation that is counter to the rotation produced by the swirling elements (212a') which lie on the proximal ring of holes.

9. Gas sensor according to one of the preceding claims, **characterized in that** the outer protective sleeve (21) has at least two end-face openings (214), which are formed as pressed-in segments (215).

10. Gas sensor according to Claim 9, **characterized in that** the inner protective tube (22) has on its end face only one central round opening (224), the opening diameter of which is no smaller than half the inside diameter of the inner protective sleeve (22).

## Revendications

1. Capteur de gaz permettant de détecter un constituant d'un gaz de mesure, comprenant un élément capteur (10) en céramique qui est immobilisé dans un carter (11), et un tube de protection (20) à double paroi muni d'une gaine de protection extérieure (21) et d'une gaine de protection intérieure (22), dans lequel la gaine de protection intérieure (22) entoure un compartiment à gaz (30) dans lequel l'élément capteur (10) fait saillie avec une partie (101) côté gaz de mesure en direction d'un axe longitudinal (100) du capteur de gaz, et dans lequel un espace annulaire (31) est réalisé entre les gaines de protection extérieure et intérieure (21, 22), dans lequel la gaine de protection extérieure (21) présente une surface latérale (211) munie d'au moins d'une ouverture (212) réalisée sous forme d'élément de turbulence (212a) et à travers laquelle un gaz de mesure en rotation autour d'un axe longitudinal (100) du capteur de gaz (1) atteint l'espace annulaire (31), dans lequel la gaine de protection intérieure (22) présente au moins une ouverture (222) alignée par rapport à une zone sensible (102) de l'élément capteur (10), en particulier alignée de manière optimisée quant à sa fonction, à travers laquelle le gaz de mesure atteint le compartiment de gaz (30) à partir de l'espace annulaire (31), et au passage à travers l'ouverture (222), en raison de l'alignement de l'ouverture (222), le gaz de mesure est dévié dans la direction longitudinale vers l'élément capteur (10), **caractérisé en ce que** ladite au moins une ouverture (222) de la gaine de protection intérieure (22) est réalisée sous la forme d'un élément de turbulence supplémentaire (222a) qui est orienté dans la direction circonférentielle à contresens de l'élément de turbulence de la gaine de protection extérieure (212a).

2. Capteur de gaz selon la revendication 1, **caractérisé en ce que** le capteur de gaz (1) est un capteur d'oxygène dont l'élément capteur (10) présente une cavité (103a) réalisée dans à l'intérieur de celui-ci et une cellule électrochimique (103b), **en ce que** la cellule électrochimique (103b) présente deux électrodes (104a, 104b) dont au moins l'une est disposée dans la cavité (103a), **en ce que** l'élément capteur (10) présente un orifice d'entrée de gaz (105) qui relie le compartiment de gaz (30) à la cavité (103a).

3. Capteur de gaz selon l'une quelconque des revendications 1 ou 2, **caractérisé en ce que** ladite au moins une ouverture (222) de la gaine de protection intérieure (22) est réalisée sous la forme d'une couronne ajourée s'étendant autour de la circonférence de la gaine de protection intérieure (22).

4. Capteur de gaz selon l'une quelconque des revendications précédentes, **caractérisé en ce que** la gaine de protection intérieure (22) présente sur la face frontale au moins une ouverture supplémentaire (224) qui est réalisée sous la forme d'un segment (225) enfoncé dans le compartiment de gaz.

5. Capteur de gaz selon l'une quelconque des revendications précédentes, **caractérisé en ce qu'**une face frontale (223) de la gaine de protection intérieure (22) dépasse dans la direction longitudinale une face frontale (213) de la gaine de protection intérieure (21).

6. Capteur de gaz selon l'une quelconque des revendications précédentes, **caractérisé en ce que** dans la direction longitudinale, la face frontale (223) de la gaine de protection intérieure (22) ne dépasse pas la face frontale (213) de la gaine de protection extérieure (21), et un espace intermédiaire (32) est réalisé entre la gaine de protection intérieure (22) et la gaine de protection extérieure (21) sur la face frontale, qui est séparé fluidiquement de l'espace annulaire (31).

7. Capteur de gaz selon l'une quelconque des revendications précédentes, **caractérisé en ce que** la surface latérale (211) présente au moins une ouverture supplémentaire (212'), réalisée sous forme d'élément de turbulence supplémentaire (212a'), à travers laquelle un gaz de mesure en rotation opposée ladite rotation autour de l'axe longitudinal (100) du capteur de gaz (1) peut atteindre l'espace annulaire (31).

8. Capteur de gaz selon l'une quelconque des revendications précédentes, **caractérisé en ce que** la gaine de protection extérieure (21) présente des ouvertures (212, 212') qui se trouvent sur deux couronnes ajourées qui sont disposées l'une après l'autre, vues dans la direction longitudinale (100) du capteur de gaz, et **en ce que** les ouvertures (212, 212') sont réalisées sous forme d'éléments de turbulence (212a, 212a') de sorte qu'elles font entrer dans l'espace annulaire (31) un gaz de mesure en rotation autour de l'axe longitudinal (100) du capteur de gaz (1), et **en ce que** les éléments de turbulence (212a) situés sur la couronne ajourée distale produisent une rotation qui est opposée à la rotation produite par les éléments de turbulence (212a') situés sur la couronne ajourée proximale.

9. Capteur de gaz selon l'une quelconque des revendications précédentes, **caractérisé en ce que** la gaine de protection extérieure (21) présente au moins deux ouvertures frontales (214) qui sont réalisées sous forme de segments enfoncés (215).

10. Capteur de gaz selon la revendication 9, **caractérisé en ce que** le tube de protection intérieur (22) ne présente sur sa face frontale qu'une ouverture ronde centrale (224) dont le diamètre d'ouverture n'est pas inférieur à la moitié du diamètre intérieur de la gaine de protection intérieure (22).
